# EUROPEAN PATENT SPECIFICATION

(11) **EP 1 929 724 B1**
(45) Date of publication and mention of the grant of the patent: **09.11.2011**
(21) Application number: 05802093.4
(22) Date of filing: 27.09.2005
(51) Int. Cl.: H04L 12/58

(54) **EMAIL SERVER WITH PROXY CACHING OF MESSAGE IDENTIFIERS AND RELATED METHODS**
EMAIL-SERVER MIT PROXY-CACHING VON NACHRICHTENKENNUNGEN UND DIESBEZÜGLICHE VERFAHREN
SERVEUR DE COURRIEL AVEC CACHE PROXY D'IDENTIFICATEURS DE MESSAGE ET PROCEDES ASSOCIES

(43) Date of publication of application: 11.06.2008
(73) Proprietor: Teamon Systems, Inc., Issaquah, Washington 98027 (US)
(72) Inventor: CLARKE, David, J., Issaquah, WA 98027 (US); KAMAT, Harshad, N., Maple Valley, WA 98038 (US)
(74) Representative: Roberts, Gwilym Vaughan
(86) International application number: PCT/US2005/034499
(87) International publication number: WO 2007/040501

(56) References cited:
- WO-A-03/036492
- WO-A-2005/046148

## Description

### Field of the Invention

The present invention relates to the field of communications systems, and, more particularly, to electronic mail (email) communications systems and related methods.

### Background of the Invention

Electronic mail (email) has become an integral part of business and personal communications. As such, many users have multiple email accounts for work and home use. Moreover, with the increased availability of mobile cellular and wireless local area network (LAN) devices that can send and receive emails, many users wirelessly access emails from mailboxes stored on different email storage servers (e.g., corporate email storage server, Yahoo, Hotmail, AOL, etc.).

Yet, email distribution and synchronization across multiple mailboxes and over wireless networks can be quite challenging, particularly when this is done on a large scale for numerous users. For example, different email accounts may be configured differently and with non-uniform access criteria. Moreover, as emails are received at the wireless communications device, copies of the emails may still be present in the original mailboxes, which can make it difficult for users to keep their email organized.

One particularly advantageous "push" type email distribution and synchronization system is disclosed in U.S. Patent No. 6,779,019 to Mousseau et al., which is assigned to the present Assignee. This system pushes user-selected data items from a host system to a user's mobile wireless communications device upon detecting the occurrence of one or more user-defined event triggers. The user may then move (or file) the data items to a particular folder within a folder hierarchy stored in the mobile wireless communications device, or may execute some other system operation on a data item. Software operating at the device and the host system then synchronizes the folder hierarchy of the device with a folder hierarchy of the host system, and any actions executed on the data items at the device are then automatically replicated on the same data items stored at the host system, thus eliminating the need for the user to manually replicate actions at the host system that have been executed at the mobile wireless communications device. WO 2005/046148 (D1) is directed to a managing server stores messages exchanged using a messaging system. Messages, and components of messages, are cached closer to the messaging clients. The messaging client requests-for-messages are served from the cache rather than from the messaging server. The messages can be secured using security information stored at the messaging server. The messaging server sends the security information directly to the messaging clients.

The foregoing system advantageously provides great convenience to users of wireless email communication devices for organizing and managing their email messages. Yet, further convenience and efficiency features may be desired in email distribution and synchronization systems as email usage continues to grow in popularity.

### Brief Description of the Drawings

Other objects, features and advantages of the present invention will become apparent from the detailed description of the invention which follows, when considered in light of the accompanying drawings in which:

FIG. 1 is schematic block diagram of a direct access electronic mail (email) distribution and synchronization system in accordance with the present invention.

FIG. 2 is a schematic block diagram of an exemplary embodiment of user interface components of the direct access proxy of the system of FIG. 1.

FIG. 3 is a schematic block diagram of an exemplary embodiment of the Web client engine of the system of FIG. 1.

FIGS. 4 is a schematic block diagram of an exemplary embodiment of the mobile office platform engine machine for use in the system of FIG. 1.

FIG. 5 is a schematic block diagram of an exemplary embodiment of the database module of the system of FIG. 1.

FIGS. 6A and 6B are high-level flowcharts illustrating operation of an electronic mail (email) server that obtains mappings for mapping message identifiers.

FIG. 7 is a high-level flowchart illustrating a process for reducing UID mappings in cache.

FIG. 8 is a high-level flowchart illustrating a basic process of improving a Least Recently Used (LRU) cache.

FIG. 9 is a schematic block diagram illustrating an exemplary mobile wireless communications device that can be used with the Direct Access system shown in FIG. 1.

### Detailed Description of the Preferred Embodiments

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout, and prime notation is used to indicate similar elements in alternative embodiments.

An electronic mail (email) server includes a proxy that obtains mappings for new unique identifiers (UID's) corresponding to new electronic messages that had been determined from polling an electronic mailbox. A cache is included in which the mappings of UID's of the electronic messages are cached. The proxy is operative for receiving at least one of a Get, Delete or Move request for a message identifier (MsgID) that had not been cached and mapping the MsgID and number of other MsgID's around the MsgID that had not been cached. A listing of MsgID's can be a chronological, a reverse chronological, or a random sorting. As a non-limiting example, the term "around" can be defined in reference to these listings as a certain number of MsgID's before and after the target MsgID.

The proxy is operative for caching the MsgID and "n" number of other MsgID's. The variable "n" could be a number between about 10 and about 100 in one not-limiting example. The proxy is typically operative for maintaining the number of cached mappings of MsgID's to below a predetermined number. The proxy can also be operative for clearing the cache if the number of cached mappings of MsgID's exceeds a predetermined number. A database can store the UID's and MsgID's and a polling engine can poll the electronic mailbox to retrieve UID's.

A communications system, electronic mail processing method and computer-readable medium having computer-executable modules is set forth.

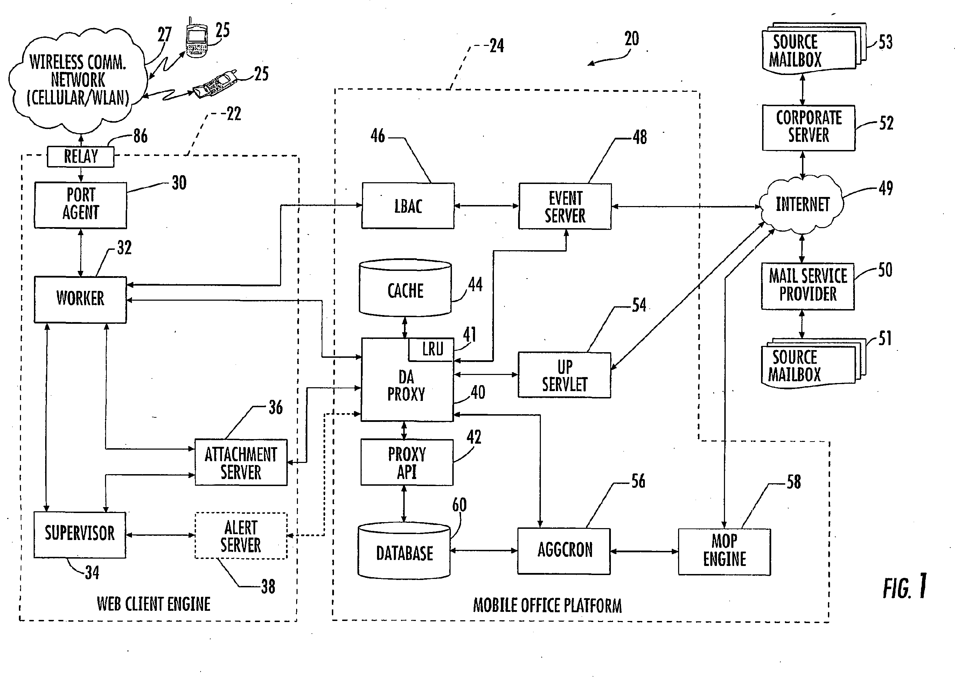

Referring initially to FIG. 1, a direct access (DA) email distribution and synchronization system **20** allows direct access to different mail sources, allowing messages to be transferred directly to a mobile wireless handheld device from a source mailbox. As a result, different mail stores need not be used for integrated external source mail accounts, and a permanent copy of an email in a local email store is not required.

Although this diagram depicts objects as functionally separate, such depiction is merely for illustrative purposes. It will be apparent to those skilled in the art that the objects portrayed in this figure can be arbitrarily combined or divided into separate software, firmware or hardware components. Furthermore, it will also be apparent to those skilled in the art that such objects, regardless of how they are combined or divided, can execute on the same computing device or can be arbitrarily distributed among different computing devices connected by one or more networks.

The direct access system **20** enables email users or subscribers to have email from third party email services pushed to various mobile wireless communications devices **25.** Users need not create a handheld email account to gain direct access to an existing external email account. The direct access system **20** may operate without performing aggregation as used in some prior art systems, in which emails are aggregated from multiple different source mailboxes to a single target mailbox. In other words, email need not be stored in an intermediate target mailbox, but instead may advantageously be accessed directly from a source mail store.

As illustrated in FIG. 1, the direct access system **20** illustratively includes a Web client (WC) engine **22** and a mobile office platform (MOP) **24.** These Web client engine **22** and mobile office platform **24** operate together to provide users with direct access to their email from mobile wireless communications devices **25** via one or more wireless communications networks **27,** for example. Both the Web client engine **22** and the mobile office platform **24** may be located at the same location or at separate locations, and implemented in one or more servers. The web client engine **22** illustratively includes a port agent **30** for communicating with the wireless communications devices **25** via the wireless communications network(s) **27,** a worker **32,** a supervisor **34,** and an attachment server **36,** which will be discussed further below. An alert server **38** is shown in dashed lines, and in one preferred embodiment, is not used, but could be part of the system in yet other embodiments.

The mobile office platform **24** illustratively includes a DA proxy **40,** and a proxy application programming interface (API) **42** and a cache **44** cooperating with the DA proxy. The mobile office platform **24** also illustratively includes a load balance and cache (LBAC) module **46,** an event server **48,** a universal proxy (UP) Servlet **54,** an AggCron module **56,** a mobile office platform (MOP) engine **58,** and a database (DB) engine **60,** which will be discussed in further detail below. The Least Recently Used (LRU) cache **41** caches new messages, and can release messages and objects that were least recently used.

The supervisor **34** processes new mail notifications that it receives from the direct access proxy **40.** It then assigns a job, in the form of a User Datagram Protocol (UDP) packet, to the least-loaded worker **32,** according to the most recent UDP heartbeat the supervisor **34** has received. For purposes of this description, heartbeat is a tool that monitors the state of the server. Additionally, the supervisor **34** will receive a new service book request from the direct access proxy **40** to send service books to the mobile wireless communication device for new or changed accounts. A service book can be a class that could contain all service records currently defined. This class can be used to maintain a collection of information about the device, such as connection information or services, such as an email address of the account.

The worker **32** is an intermediary processing agent between the supervisor **34** and the port agent **30,** and responsible for most processing in the Web client engine **22.** It will retrieve e-mail from a universal proxy **54,** via a direct access proxy, and format e-mail in Compressed Multipurpose Internet Mail Extension (CMIME) as a type of Multipurpose Internet Mail Extension, and send it to the port agent **30,** for further processing. Its responsibilities include the following tasks: (1) messages sent to and received from the handheld; (2) message reply, forward and more requests; (3) Over The Air Folder Management operation (OTAFM); (4) attachment viewing; and (5) service book.

The port agent **30** acts as a transport layer between the infrastructure and the rest of the Web client engine **22.** It is responsible for delivering packets to and from the mobile wireless communications device. To support different integrated mailboxes with one device, more than one service book can be used, and each service book can be associated with one integrated mailbox. A port agent **30** can include one Server Relay Protocol (SRP) connection to a relay, but it can also handle multiple SRP connections, and each connection may have a unique Globally Unique Identifier (GUID) associated with a service book. The attachment server **36** provides service for document/attachment conversion requests from workers **32.**

The direct access proxy **40** provides a Web-based Distributed Authoring and Versioning (WebDAV) interface that is used by the worker **32** to access account and mailbox information. This provides functionality to create, change and move documents on a remote server, e.g., a Web server. The direct access proxy **40** typically will present an asynchronous interface to its clients. The LBAC module **46** is used by a notification server and the Web client engine **22** components to locate the proper DA proxy for the handling of a request. The universal proxy Servlet **54** abstracts access to disparate mail stores into a common protocol. The event server **48** responds to notifications of new messages from corporate servers **52** and/or mail service providers **50,** which may be received via the Internet **40,** for example. The notifications are communicated to the direct access proxy **40** by the AggCron module **56** and the event server **48** so that it may initiate checking for new mail on source mailboxes **51, 53** of the mail service providers **50** and/or corporate servers **52.** The proxy API can be a Simple Object Access Protocol (SOAP) Daemon **42** and is the primary interface into a database **60,** which is the primary data store for the mobile office platform **24.** The AggCron module **56** may also periodically initiate polling for new messages as well.

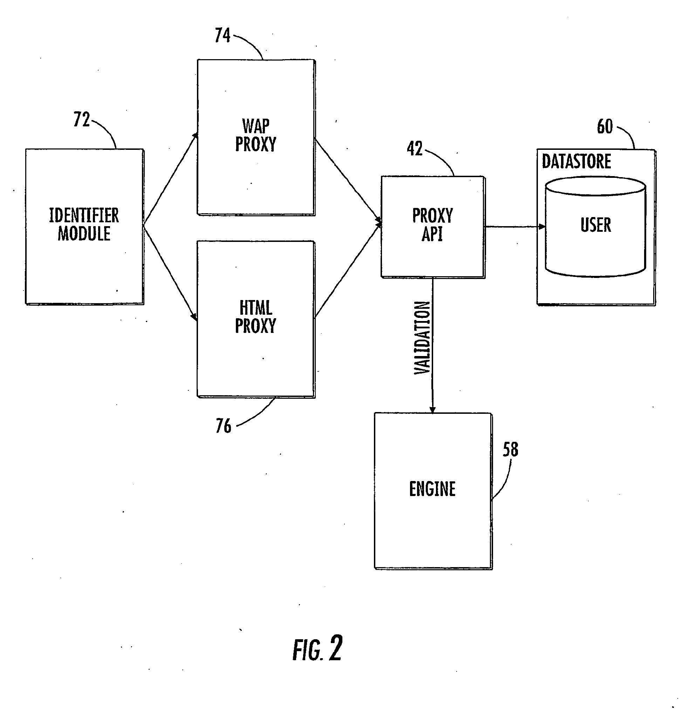

FIG. 2 is a high-level block diagram showing user interface components of the direct access proxy **40.** More particularly, the direct access proxy **40** illustratively includes an identifier module **72** with various downstream proxy modules for different communication formats, such as a Wireless-Application Protocol (WAP) proxy module **74** and a Hypertext Markup Language (HTML) proxy module **76.** Of course, it will be appreciated by those skilled in the art that other types of proxy modules for other communications formats may also be used.

The identifier module **72** provides a centralized authentication service for the direct access system **20** and other services. An authentication handshake may be provided between an ID service and direct access system **20** to ensure that users have the proper credentials before they are allowed access to the direct access system **20.** The ability to switch from managing a Web client to a direct access system, or vice versa, may occur without requiring the user to reenter any login credentials. Any Web client and direct access may share session management information on behalf of a user.

The WAP proxy **74** provides a wireless markup language (WML)-based user interface for configuring source mailboxes with the mobile office platform **24.** The HTML proxy **76** provides an HTML-based user interface for configuring of source mailboxes in the MOP **24.** The proxy API **42** (SOAP Daemon) is the primary interface into the database **60.** The engine **58** is a protocol translator that connects to a source mailbox to validate configuration parameters. The database **60** is the primary user data store for the mobile office platform **24.**

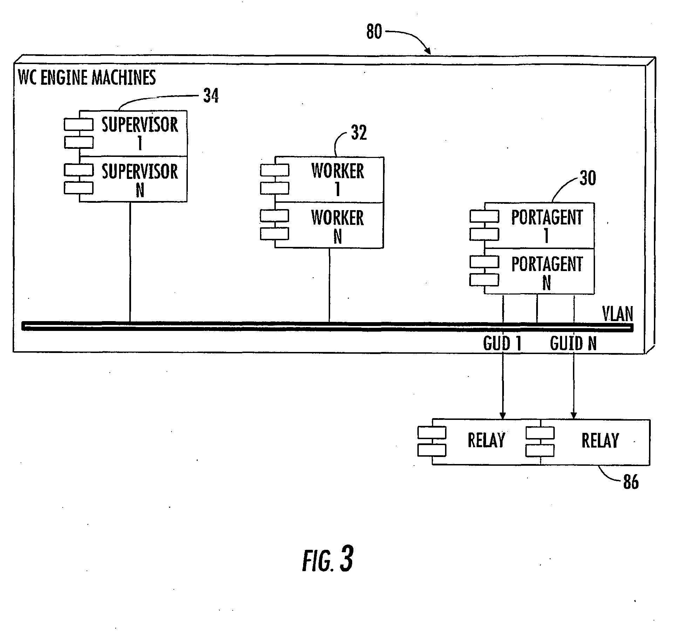

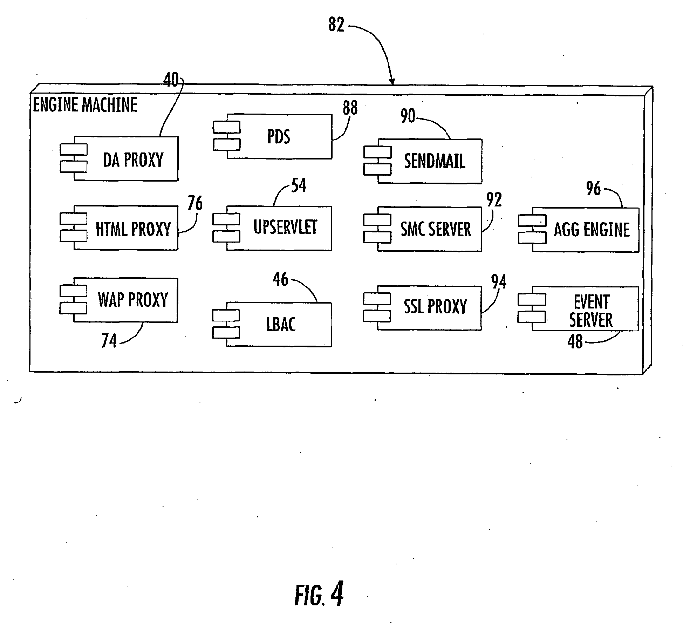

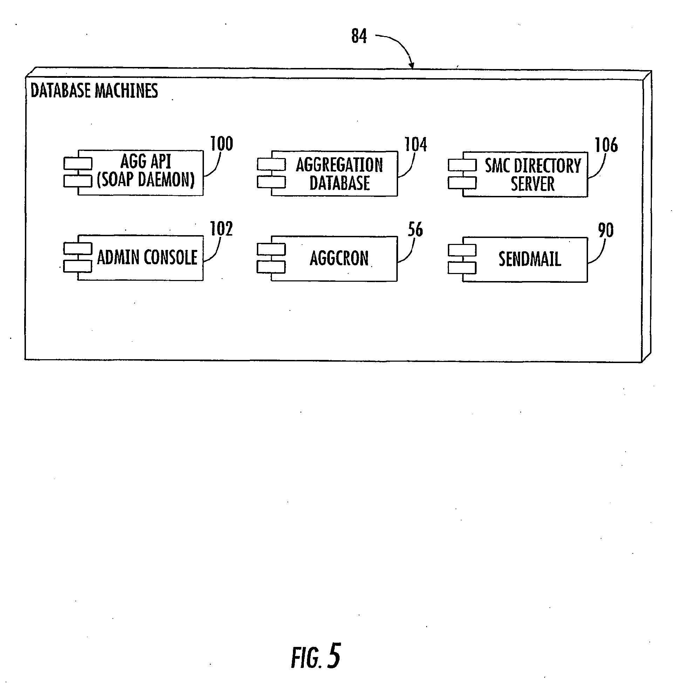

FIGS. 3, 4 and 5 illustrate respective Web client engine machines **80** (FIG. 3), an engine machine **82** (FIG. 4), and database machine **84** (FIG. 5). The Web client engine machine **80** illustratively includes the supervisors **34,** workers **36,** and port agents **38.** Relays **86** cooperate with the port agents **38** using a GUID.

The engine machine **82** illustratively includes a direct access proxy **40,** HTML proxy **76,** WAP proxy **74,** PDS module **88,** UP Servlet **54,** LBAC module **46,** a sendmail module **90,** an secure mail client (SMC) server **92,** a secure sockets layer (SSL) proxy **94,** an aggregation engine **96,** and event server **48.** The SMC server **92** cooperates with corresponding SMC modules resident on certain corporate networks, for example, to convey email data between the mobile office platform **24** and source mailboxes. The database machine **84** may include an aggregation application programming interface (API) **100** as a SOAP Daemon, an administration console **102,** an aggregation database **104,** the AggCron module **56,** an SMC directory server **106,** and a send mail module **90.**

The various components of the Web client engine **22** may be configured to run on different machines or servers. The component binaries and configuration files may either be placed in a directory on the network or placed on a local disk that can be accessed to allow the appropriate components to run from each machine. In accordance with one exemplary implementation, deployment may include one supervisor, two workers, and one port agent for supporting 30,000 external source mailboxes, although other configurations may also be used. Actual production deployment may depend on the results of load, performance and stress testing, as will be appreciated by those skilled in the art.

For the mobile office platform **24** direct access components, modules and various functions, machines are typically installed in two configurations, namely engine machines (FIG. 4) and database machines (FIG. 5). While these machines may have all of the above-described components installed on them, not all of these components need be active in all applications (e.g., aggregation may be used with systems that do not support push technology, etc.). Once again, actual production deployment may depend on the results of load, performance and stress testing.

The mobile office platform **24** architecture in one known technique advantageously uses a set of device/language-specific extensible Stylesheet Language (XSL) files, which transform application data into presentation information. In one non-limiting example, a build process takes a non-localized XSL and generates a localized XSL for each supported language. When the XSL is used, it is "compiled" in memory and cached for repeated use. The purpose of pre-localizing and caching the templates is to reduce the CPU cycles required to generate a presentation page.

Branding may also be performed. Initially, a localized XSL may build a WAP application to access aggregated email accounts. A WAP proxy application may be localizable and support multiple WAP devices. For each logical page of an application, a device-specific XSL may be created, which may be localized for each language/country supported. This rendering scheme may support not only WAP devices, but also SMTP, HTML and POP proxies, for example. In branding, each page of a given application may be customized for each different brand.

The branding of a page may be accomplished through XSL imports, including the use of a Java application programming interface (API) for XML processing (JAXP) feature to resolve the imports dynamically. This need not require that each combined page/brand template be compiled and cached. By way of example, in a sample template directory, first and second pages for a single language/country may be combined with branded counterparts to generate a plurality of distinct template combinations. It is also possible to profile memory requirements of an application by loading templates for a single language, device/application and brand. An HTML device may include a set of templates that are large compared to other devices.

In one known technique, the mobile office platform **24** advantageously builds processes and takes non-localized files and language-specific property files and combines them to make each non-localized XSL into an XSL for each supported language. A separate XSL for each language need not be used, and the language factor may be removed from the memory usage equation. A JAXP API may be used to extend XSL with Java classes. The extensions may take various forms, for example, including extension elements and extension functions. A template may be transformed by creating and initializing an extension object with a locale and passing an object to a transformer. The system can remove multiple imports and use less memory. HTML templates can use template importing to enable template reuse, much like Java classes, and reuse other Java classes through a mechanism like derivation or importing.

In the direct access system **20,** users receive email on their mobile wireless communications devices **25** from multiple external accounts, and when replying to a received message, the reply-to and sent-from address integrity is preserved. For example, for a user that has an integrated Yahoo! account (user@yahoo.com) and a POP3 account (user@pop3.com), if they receive an email at user@yahoo.com, their replies generated from the device **25** will appear to come from user@yahoo.com. Similarly, if a user receives an email at user@pop3.com, their replies will appear to come from user@pop3.com.

Selection of the "sent from" address is also available to a user that composes new messages. The user will have the ability to select the "sent from" address when composing a new message. Depending on the source mailbox type and protocol, the message may also be sent through the source mail service. This functionality can be supported by sending a configuration for each source mailbox, for example, as a non-limiting example, a service book for each source mailbox **51, 53** to the mobile wireless communications device **25.**

As noted above, a service book is a class that may include all service records currently defined. This class may be used to maintain a collection of information about the device, such as connection information. The service book may be used to manage HTTP connections and mail (CMIME) information such as account and hierachy. At mobile wireless communications devices **25,** a delete service book request may be sent when a source mailbox **51, 53** is removed from the account. The service book may also be resent to the device **25** with a viewable name that gives the user some indication that the selection is no longer valid.

A sent items folder may also be "synchronized." Any device-originated sent messages may be propagated to a source account and stored in a sent mail folder, for example. Also, messages deleted on the device **25** may correspondingly be deleted from the source mailbox **51, 53.** Another example is that device-originated marking of a message as read or unread on the device **25** may similarly be propagated to the source mailbox **51, 53.** While the foregoing features are described as source-dependent and synchronizing one-way, in some embodiments certain synchronization features may in addition, or instead, propagate from the source mailbox/account to the handheld device, as will be appreciated by those skilled in the art.

When available, the mail service provider or corporate mail server may be used for submission of outgoing messages. While this may not be possible for all mail service providers or servers, it is preferrably used when available as it may provide several advantages. For example, subscribers to AOL will get the benefit of AOL-specific features like parental controls. Furthermore, AOL and Yahoo users, as non-limiting examples, will see messages in their sent items folder, and messages routed in this manner may be more compliant with new spam policies such as Sender Policy Framework (SPF) and Sender Id. In addition, messages sent via corporate mail servers **52** will have proper name resolution both at the global address list level and the personal level. It should be understood, however, that the use of the mail service provider **50** to deliver mail may be dependant on partner agreements and/or protocol, depending upon the given implementation.

The architecture described above also advantageously allows for features such as on-demand retrieval of message bodies and attachments and multiple folder support. Morever, a "this-is-spam" button or indicator may be used allowing company labels and other service provider-specific features when supported by an underlying protocol, as will be appreciated by those skilled in the art.

One particular advantage of the direct access system **20** is that a user need not configure an account before integrating additional accounts. However, a standalone email address may be used, and this address advantageously need not be tied to a mailbox size which the subscriber is required to manage. For example, the email account may be managed by an administrator, and any mail could be purged from the system after a predetermined period of time (i.e., time-based auto-aging with no mailbox limit for all users).

Additionally, all aspects of any integrated email account creation, settings and options may advantageously be available to the user from their mobile wireless communications device **25** Thus, users need not visit an HTML site and change a setting, create a filter, or perform similar functions, for example. Of course, an HTML site may optionally be used.

As a system Internet email service with the direct access system **20** grows, ongoing emphasis may advantageously be placed on the administrative site to provide additional information to carrier administrators, support teams, and similar functions. However, in some instances a mail connector may be installed on a personal computer, and this functionality may not always be available from the mobile wireless communications device.

The Web client engine **22** may advantageously support different features including message to handheld (MTH), message from handheld (MFH), forward/reply a message, request to view more for a large message (e.g., larger than 2K), request viewing message attachment, and over the air folder management (OTAFM). These functions are explained below.

For an MTH function, each email account integrated for a user is linked with the user device through a Web client service book. For each new message that arrives in the Web client user mailbox, a notification that contains the new message information will typically be sent to a Web client engine supervisor component (FIG. 3), which in turn will assign the job to an available worker with the least load in the system. The chosen worker **32** will validate the user information and retrieve the new message from the user source mailbox and deliver it to the user device.

In an MFH function, MFH messages associated with a Web client service book are processed by the Web client engine **22** and delivered to the Internet **49** by the worker **32** via the simple mail transfer protocol (SMTP) or native outbox. If a user turns on the option to save the sent message to the sent items folder, the direct access proxy will save a copy of the sent message to this folder.

In a Forward/Reply/More function, the user can forward or reply an MTH or MFH message from the mobile wireless communications device **25** as long as the original message still existed in the direct access proxy cache or in user mailbox. For MTH, the worker **32** may send the first 2K, for example, or the whole message (whatever is less) to the user device. If the message is larger than 2K, the user can request MORE to view the next 2K of the message. In this case, the worker **32** will process the More request by retrieving the original message from the user source mailbox, and send back the 2K that the device requests. Of course, in some embodiments more than 2K of message text (or the entire message) may be sent.

In an attachment-viewing function, a user can view a message attachment of a popular document format (e.g., MS Word, MS Power Point, MS Excel, Word Perfect, PDF, text, etc.) or image format (GIF, JPEG, etc). Upon receiving the attachment-viewing request, which is implemented in a form of the More request in this example, the worker **32** can fetch the original message from the user source mailbox via the direct access proxy, extract the requested attachment, process it and send result back to the user device. The processing requires that the original message has not been deleted from the user Web client mailbox.

In the save sent message to sent items folder function, if the user turns this option on, the worker **32** places a copy of each MFH message sent from the user device in the user sent items folder in the mailbox. In over the air folder management, the Web client OTAFM service maintains any messages and folders in the user mailbox synchronized with the user device over the air.

Whenever a message in the user source mailbox is Moved/Deleted, the associated message on the device may also be Moved/Deleted accordingly, and vice-versa. When a message is Moved/Deleted on the device, the associated message in the user Web client mailbox may also be Moved/Deleted accordingly. Similarly, when a folder is Added/Removed/Renamed from the user Web client mailbox, the associated folder on the device may be Added/Removed/Renamed, and vice-versa.

The system **20** may advantageously support different subsets of various messaging features. For example, in the message to handheld function, the mobile office platform **24** may be responsible for connecting to the various source mailboxes **51, 53** to detect new emails. For each new mail, a notification is sent to the Web client engine **22** and, based on this notification, the supervisor **34** chooses one of the workers **32** to process that email. The chosen worker will fetch additional account information and the contents of the mail message from the direct access proxy **40** and deliver it to the user device **25.**

In a message sent from handheld function, the MFH could be given to the direct access proxy **40** from the Web client worker **32.** In turn, the mobile office platform **24** delivers a message to the Internet **49** by sending through a native outbox or sending it via SMTP. It should be understood, however, that the native outbox, whenever possible, may provide a better user experience, especially when taking into account current anti-spam initiatives such as SPF and sender Id.

In a message deleted from handheld function, when a message is deleted from the device **25,** the Web client engine **22** notifies the mobile office platform **24** via the direct access proxy **40.** As such, the mobile office platform **24** can delete the same message on the source mailbox.

When handling More/Forward/Reply/Attachment viewing requests, the Web client worker **32** may request an original mail from the direct access proxy **40.** It will then process the request and send the results to the mobile wireless communications device **25.** The architecture may additionally support on-demand retrieval of message parts and other upgrades, for example.

Upon the integration of a new source mailbox **51, 53,** the service book notification from the alert server **38** may be sent to the supervisor **34,** which assigns this notification to a worker **32** for sending out a service record to the device. Each source mailbox **51, 53** may be associated with a unique service record. In this way, each MFH message is linked with a source mailbox **51, 53** based on the service record on the device.

The system **20** may also poll the integrated external mailboxes periodically to check for new mail and to access any messages. The system **20** may further incorporate optimizations for polling bandwidth from an aggregation component allowing a quick poll. The system **20** can also advantageously support a large active user base and incorporate a rapidly growing user base.

The topology of load balancing can be based on the size of a component's queue and its throughput. These load statistics can be monitored by a mechanism in one example called the UDP Heartbeat, as described before. If a component is overloaded or has a large queue size, the component will have less chance to get an assigned job from other components. In contrast, a component will get more assigned jobs if it completes more jobs in the last few hours than other components. With this mechanism, the load could distribute over heterogeneous machine hardware, i.e., components running on less power machines will be assigned fewer jobs than those on machines with more power hardware.

General load balancing for any mobile office platform components can be accomplished through the use of a load balancer module, for example, a BIG-IP module produced by F5 Networks of Seattle, Washington. BIG-IP can provide load balancing and intelligent layer 7 switching, and can handle traffic routing from the Internet to any customer interfacing components such as the WAP and HTML proxies. The use of a BIG-IP or similar module may provide the application with pooling capabilities, fault tolerance and session management, as will be appreciated by those skilled in the art.

Typically, access to a single source mailbox **51, 53** can be from a single direct access proxy **40** over a persistent connection. Any requests on behalf of a particular user could persist to the same machine in the same direct access clustered partition. As certain components are system-wide and will be handling work for users across many partitions, these components can be designed to determine which direct access partition to communicate with on a request-by-request basis.

The load balancer and cache (LBAC) **46** may support this function. The LBAC **46** is a system-wide component that can perform two important functions. The first of these function is that it provides a mapping from the device PIN to a particular direct access proxy **40,** while caching the information in memory for both fast access and to save load on the central database. Secondly, as the direct access proxy **40** will be run in clustered partitions, the LBAC **46** may distribute the load across all direct access proxies within any partition.

The LBAC **46** can be formed of different components. For example, the code which performs the load balancing can be an extended version of a secure mail connector. The code can also perform lookups to the central database and cache the results (LBAC).

In one non-limiting example, when a worker requires that a direct access proxy **40** perform work, it provides the LBAC **46** with a device PIN. The LBAC **46** will discover which partition that PIN is associated with by looking in its cache, or retrieving the partition identifier from a central database (and caching the result). Once the partition is known, the LBAC **46** then consults its cache to see which direct access proxy in that partition has been designated to handle requests for that PIN. If no mapping exists, the LBAC.requests the PDS to create a new association on the least loaded DA proxy **40** (again caching the result). Finally, the LBAC **46** responds to the worker **32** with the connection information for the proper direct access proxy to handle that particular request.

The secure mail connector **88** may run in failover pairs, where one is an active master and the other is a secondary standby. Internal data structures may be replicated in real-time from the master to the standby. Multiple LBACs **46** can be run for scalability and fault tolerance, but typically would require an external connection balancing component, such as the BIG-IP component as explained before.

A receiving component in the Web client engine **22** saves the job that has been assigned to it from other components to a job store on the disk before processing. It can update the status of the job and remove the job from the job store when the job processing is completed. In case of component failure or if the process is restarted, it can recover the jobs from the job store and, based on the current statuses of these jobs, continue processing these jobs to the next state, saving the time to reprocess them from the beginning:

Any recovery from the standpoint of MTH/MFH can be achieved through current polling behavior and on the Web client engine **22** recovery mechanisms. From within the mail office platform components, until a message has been successfully delivered to a Web client engine **22,** that message is not recorded in the partition database **60.** During the next polling interval, the system can again "discover" the message and attempt to notify the Web client engine **22.** For new mail events, if an event is lost, the system can pick up that message upon receiving the next event or during the next polling interval. For sources supporting notifications, this interval could be set at six hours, as one non-limiting example. For messages sent from the Web client engine **22,** and for messages that have been accepted by the Web client engine, recovery can be handled by different Web client engine components.

The Web client engine **22** may advantageously be horizontally and vertically scalable. Multiple supervisors **34** can be registered/configured with direct access proxies **40** to provide the distribution of the notification load and the availability of engine service. Multiple workers **32** and port agents **30** can run on the same machine or across multiple machines to distribute load and achieve redundancy. As the number of users grows, new components can be added to the system to achieve high horizontal scalability.

It is possible for a new component to be added/removed to/from the system automatically without down time. Traffic can automatically be delegated to a new component and diverted away from failed components. Each component within the mobile office platform **24** can be deployed multiple times to achieve horizontal scalability. To achieve vertical scalability, each mobile office platform **24** component can be a multi-threaded process with a configurable number of threads to scale under heavy load. Pools of connections can be used to reduce the overhead of maintaining too many open connections.

Currently, every time the DA proxy **10** receives a "check for new mail" notification, it obtains all the message identifiers, unique identifiers, and Href attributes as a "path" or "handle" to a message (msgId, uid, and href) mappings from the database **60** and caches them. In this description, HREF is a mechanism used to identify and retrieve a particular message from a source mailbox.
It typically has meaning to a UP Servlet. Similarly, in case the DA proxy **10** receives a Get/Delete/Move request for a MsgId and it does not find it in the cache **44,** it accesses the database and obtains all the msgId, uid, and href mappings and caches them. Once cached, these mappings will reside for the life of the user session. The database **60** can include a disk memory in which messages or portions of messages can be spooled. A disk memory to which messages or portions of messages can be spooled could be separate from the database physical structure, of course.

The Href attribute is operative to retrieve a destination universal resource locator (URL), e.g., anchor point can jump to the bookmarks of any other object identification attributes. A link could possibly display any directory containing a current page, or could generate an error depending on other elements on the web page and the server environment. When an anchor is specified, the link to that address is represented by the text between opening and closing anchor tags. The Href could also be considered a uniform resource locator being linked, making the anchor into a link. The message identifiers can be unique identifiers (UID) as are known to those skilled in the art. The Href, msgID and UID terms can be called by different names as known by those skilled in the art.

It should be understood that some mailboxes have 1000+ messages and others have up to 10,000+ messages in an Inbox and there could also be certain optimizations. In the database, (msgId, davUid, davHref) are declared as (int, varbinary(64), varbinary(255), typically about a maximum of 327 bytes per mapping. DAV can refer to distributed authoring and versioning, and in one implementation, data sizes and names could change.

In one optimization example, instead of fetching all the msgId mappings, the system could retrieve a smaller number, for example, the latest 100, when the system is about to perform a quick poll. The system does not require a full reconcile, and it is able to retrieve all UID's only when the system is about to make a full poll. If the system observes a Get/Delete/Move request on a msgId that is not cached, the system could add another stored procedure call that gives it the mapping for this particular msgId and, as an example, another 100 mappings around it.

Sample data suggests that the average mailbox size on a Work Client production is 200. A typical mailbox, however, has 2000 UID's. Each DA proxy partition typically can support at least about 30,000 mailboxes. If the system deploys three proxies per partition, then each proxy can support about 10,000 mailboxes in this non-limiting example.

As an example, the average mailbox size is typically about 200. The average UID mapping will occupy 200 bytes (60% of 327). Hence, each mailbox will require (200*200=) 40KB, and each proxy will require (40KB*10,000=) 400MB to store these mappings. If 30% of all users will be active at any given time, the memory requirement reduces to 30% of 400MB = 120MB. Similarly, if the system uses four proxies per partition, then the total memory requirement comes down to about 30% of (40KB*7,500) = 90 MB in this example.

In one embodiment, three out of four polls in the DA system **10** are quick polls. If the system introduces this optimization, it does not have to cache all the UID mappings75% of the time, and thus, the system can significantly reduce the total memory requirement to cache these mappings.

The main issue with fetching a subset, for example, 100, of all UID's in order to check for new mail is that it can give the system false positives.
If a UID from a remote server is a new, or is a visible UID by checking for existence in the list of seen UID's, the system could obtain a false positive, since we will be checking against a subset of seen UID's and not the entire set of seen UID's. False positives will result in duplicate mails being delivered to the device as new mail.

One way of getting around this problem is to fetch all the UID's from the database if the system comes across a new mail while doing a quick poll in order to make sure it is a new UID. This approach could introduce an additional database hit every time a new mail is discovered. The extra database hit would not be necessary if a quick poll does not discover any new mail.

Another optimization can be introduced in case the DA proxy **10** receives a Get/Delete/Move request for a msgId and it does not find that in the cache. In this case, the system will fetch and cache all mappings irrespective of the poll type, quick or full. This approach does not affect the total memory requirement to cache these mappings during polling but will provide some benefit if a session does not see any polling requests during its life, in which case it would not fetch all the mappings and cache them but cache only a subset.

A different approach would be to fetch all the UID mappings from the database and store them in a file-based cache instead of in memory. This would not only address the concern the system has about memory consumed, but also eliminate the need for an extra database hit. On the other hand, this type of system is much more complex to implement as opposed to storing the mappings in memory. It also could possibly decrease the performance since the list has to be accessed from disk.

Another possible approach makes a stored procedure (proc) call with a batch of UID's in the right order, and implements the quick poll logic in the stored proc call. This approach is available since the quick poll logic is rather straightforward, and it would eliminate a requirement to read all the UID mappings into memory. The quick poll logic, however, requires the system to look at the top and the bottom of the mailbox to check for new mail, in which case it would result in two separate hits to the database, once with the batch of UID's from the top, and a second time with the UID's from the bottom of the mailbox.

One method to reduce the memory requirement would be to purge the UID's that have been read into memory after the polling step is over. Once the quick or full poll is done, the system can proactively remove the UID's that have been read into memory. This polling logic requires only the UID's, and it does not require the msgId or the davHref. These are no longer read from the database into memory. The new UID mappings that have been discovered.in the polling step are cached into memory, in order to avoid a database hit when the worker asks for them.

If a Get/Delete/Move request is evident on a msgId that is not cached, another stored procedure call gives the system the mapping for this particular msgId, and 20 other mappings around it are added. These mappings are subsequently cached in memory. When the system asks the database to return the mappings for a particular msgId, the system retrieves mappings for 20 other msgIds around it, assuming that the user might operate on other messages around the one that the user is currently operating on. Checks are placed to make sure that the number of cached mappings do not keep growing and the cache is cleared if the number exceeds a certain threshold. The memory consumed by each user session to cache the UID mappings is greatly reduced.

In the DA proxy architecture **40,** there is a LRU cache **41** that caches all new messages that it finds. Each DA proxy partition could see up to one million new messages a day, for example, 30,000 users each receiving 30 messages a day, and the memory requirements of this data structure are large. For example, if the system decides to cache 1K of each message in memory and spool anything over 1K to disk, and assuming every message is at least 1K in size, the cache would require one gigabyte of memory. In order to improve upon this, one possible approach is to add a weight/value to each message based on a heuristic, e.g., its message size or the number of times it would be accessed. Every time a message is accessed, its associated value could be decremented. When this value turns zero, the system would proactively delete this message item from the cache, instead of waiting for the LRU to operate. The total memory consumption of this data structure could be reduced.

This approach relies on knowledge of the internal workings of the system. For example, messages less than 3K in size are pushed in their entirety to the device, and are likely to be accessed only twice, i.e., once the first time it is pushed to the device, and the second time if the user decides to reply or forward the message. Messages greater than 3K in size can be accessed once for every "More" request by the user, indicating that the user desires to view additional portions of the message. Messages with attachments, however, may follow a different pattern of requests unique to the working of the attachment server.

If the resulting heuristic is narrow, the system may end up deleting a message from the cache prematurely, and thus, have to download the message a second time. This could possibly increase bandwidth usage. On the other hand, if the heuristic is wide, the system may not delete messages until the LRU forces them out, thus failing to derive any benefit from the optimization.

Instead of keeping a certain portion of a message, for example, up to 1K, in memory and spooling the rest onto disk, it is also possible that messages can be retained entirely in memory or entirely on disk. Since these are new messages that the worker is going to retrieve in their entirety, keeping some portion in memory does not aid the overall response time of this request if the remaining portion will require a disk read.

One example data sample from the Work Client production finds the distribution of message sizes. The data indicated that 37% of all messages were less than 3K in size. One approach would be to keep messages less than 3K entirely in memory, and messages greater than 3K entirely on disk. In this case, the memory requirements would still be considerably high, 3K * 370K(37% of 1M messages) = 1.1G.

This example data also indicated that typically 2% of all messages are about less than 1K. Since the percentage of these messages is small, storing only messages less than 1K entirely in memory would not significantly affect the overall performance. In one embodiment, then, messages in cache can be spooled entirely on disk. This not only reduces the main memory requirements of the cache to zero, but not having any heuristic and relying on plain LRU reduces the likelihood of deleting messages prematurely and then having to download them a second time, increasing bandwidth usage.

An example DA system request rate performance spreadsheet indicates the following requirements that the DA proxy **40** (per partition) can support. Those requests that involve reading or writing to the message cache in this example are:

| | |
|---|---|
| New mail | 621,000 msg / day |
| Reply/Forward | 124,000 msg / day |
| More | 31,000 msg / day |
| Total | 776,000 msg / day |

776,000 requests over a 12 hour period amounts to about 18 requests/sec. It is possible to use multiple proxies. If the system uses one DA proxy **40** per partition, as long as the disk I/O can give the system 18 requests per second, the system should be operable in its intended manner. If the system uses two DA proxies **40** per partition, then the system may require about 9 requests/second.

It is also possible to filter out the "Received" headers from the downloaded messages and reduce the overall size of the message, and hence the memory consumed by each message in the cache.

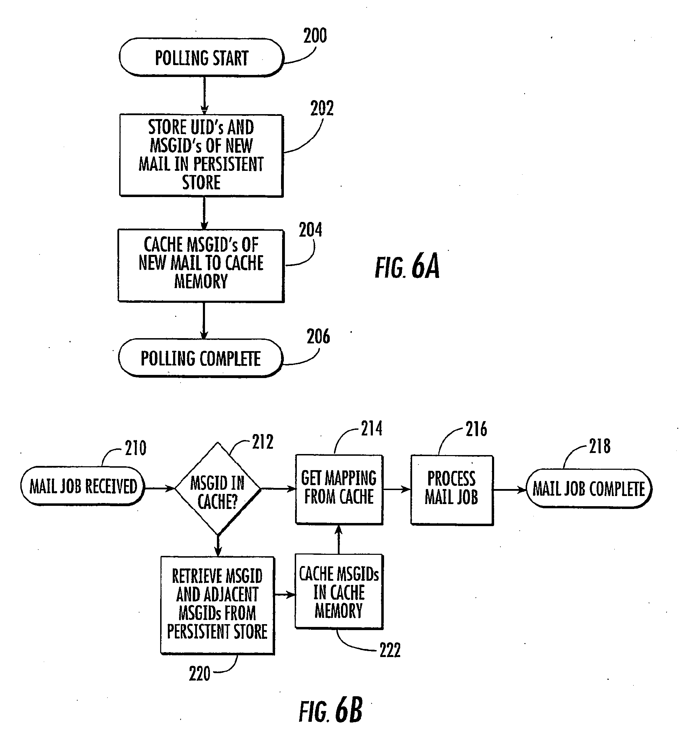

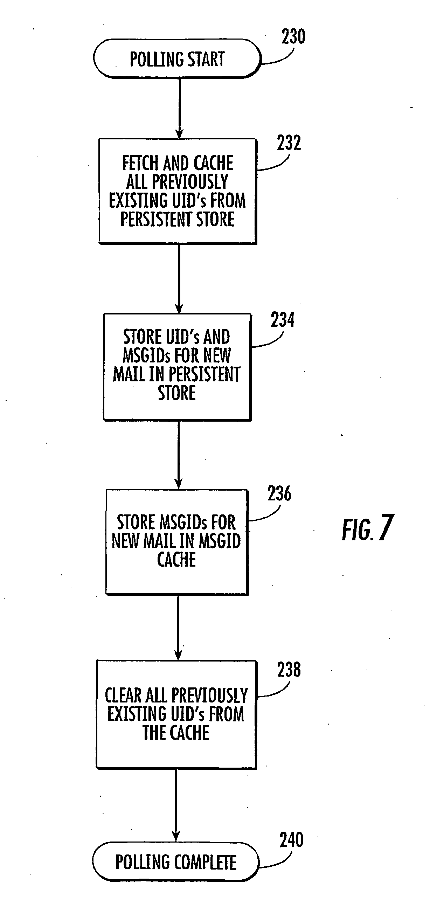

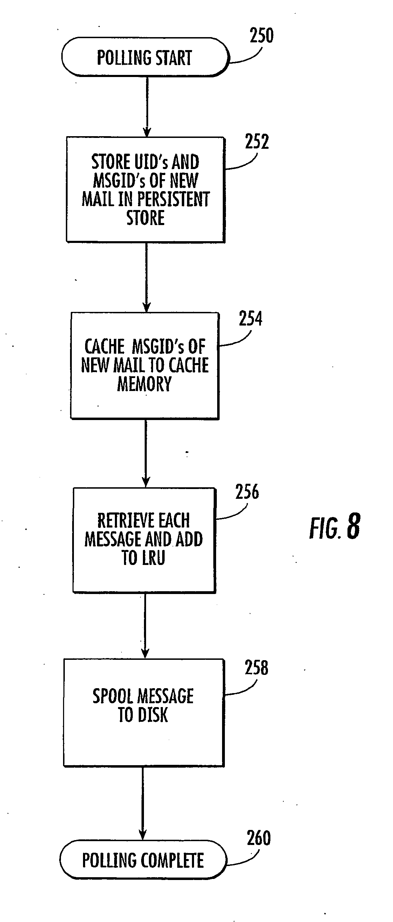

FIGS. 6A, 6B, 7 and 8 are high-level flowcharts illustrating examples of the processes for obtaining mappings for new UID's and mapping new message ID's (FIG. 6), reducing UID mappings in cache (FIG. 7), and improving the LRU cache (FIG. 8).

FIG. 6A shows that a polling function can start (block 200). The UID's and message ID's of new mail are stored in a persistent store such as a database (block 202). The message ID's of new mail are cached to a cache memory (block 204) and the polling is complete. As shown in FIG. 6B, a mail job is received (block 210) and a determination is made if a message ID is in cache (block 212). If so, a mapping is obtained from cache (block 214) and the mail job processed (block 216). The mail job is complete (block 218). Alternatively, the message ID and adjacent message ID's can be retrieved from the persistent store as a data store (block 220) and the message ID is cached in the cache memory (block 222).

As shown in FIG. 7 in this function, the polling can start (block 230). All previously existing UID's can be fetched and cached from the persistent store as a database (block 232). The UID's and message ID's for new mail can be stored in the persistent store (block 234). The message ID's for new mail can be stored in a message ID cache (block 236). All previously existing UID's can be cleared from the cache (block 238) and the polling is complete (block 240).

As shown in FIG. 8, the polling can start (block 250). The UID's and message ID's of new mail can be stored in a persistent store as a database (block 252). The message ID's or new mail can be cached to a cache memory (block 254). Each message can be retrieved and added into the LRU (block 256). The messages can be spooled to a disk (block 258). The polling is complete (block 260).

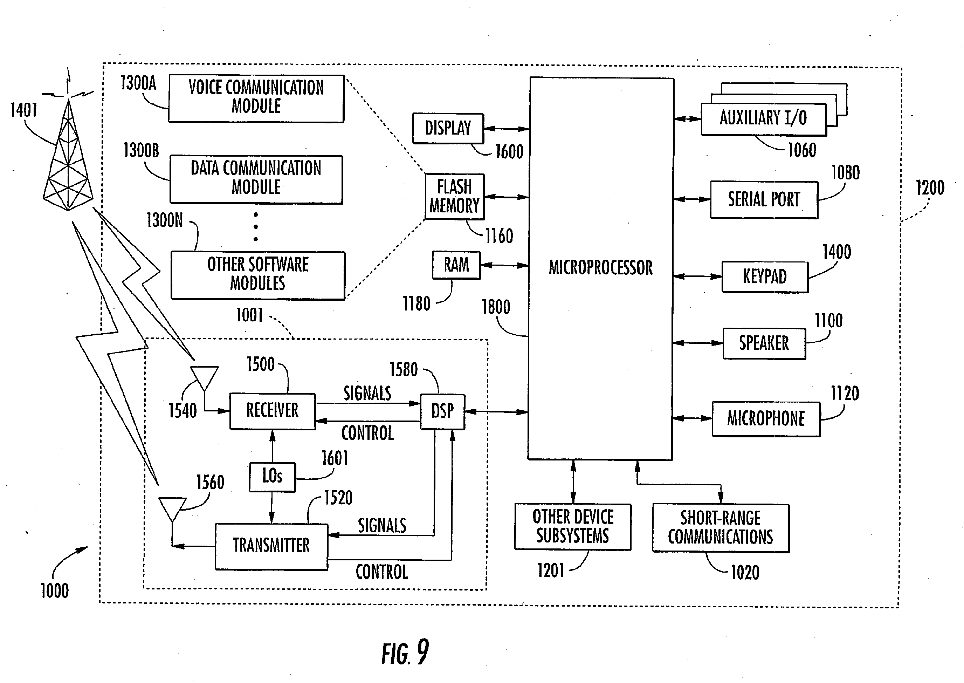

An example of a hand-held mobile wireless communications device **1000** that may be used is further described in the example below with reference to FIG. 9. The device **1000** illustratively includes a housing **1200,** a keypad **1400** and an output device **1600.** The output device shown is a display **1600,** which is preferably a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user.

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 9. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** is preferably a two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, PCS, GSM, etc. Other types of data and voice networks, both separate and integrated, may also be utilized with the mobile device **1000.**

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device 1000 and other proximate systems or devices, which need not necessarily be similar devices. For example, the short-range communications subsystem may include an infrared device and associated circuits and components, or a Bluetooth™ communications module to provide for communication with similarly-enabled systems and devices.

This application is related to copending patent applications entitled, **"EMAIL SERVER WITH PROXY CACHING OF' UNIQUE IDENTIFIERS" and "EMAIL SERVER WITH ENHANCED LEAST RECENTLY USED (LRU)" CACHE,"** which are filled on the same date and by the same assignee and inventors.

## Claims

1. An electronic mail "email" server and being **characterized by**:
a database that stores Unique Identifiers "UIDs" and Message Identifiers "MsgIds" of electronic messages;
a proxy (40) that is adapted to obtain mappings from the database for unique identifiers "UIDs" corresponding to new electronic messages and having Message Identifiers "MsgIds" wherein the MsgIds and UIDs had been determined from polling an electronic mailbox (51, 53), the UIDs and Message Identifiers "MsgIds" for the new electronic messages being persistently stored in the database; and,
a cache (44) in which the mappings of the UIDs and MsgIds obtained from the database are cached;
wherein the proxy (40) is operative for:
receiving at least one of a Get, Delete or Move request for a particular MsgId that had not been cached;
mapping said MsgId and "n" number of other MsgIds before and after said MegId that had not been cached;
and caching said MsgId and the "n" number of other MsgIds.

2. The email server according to Claim 1, wherein "n" is a number between 10 and 100.

3. The email server according to Claim 1, wherein said proxy (40) is operative for maintaining the number of cached mappings of MsgIds to below a predetermined number.

4. The emails server according to Claim 3, wherein said proxy (40) is operative for clearing the cache (44) if the number of cached mappings of MsgIds exceeds a predetermined number.

5. The email server according to Claim 1, wherein persistent storing of the UIDs and MagIds is on a database (60).

6. The email server according to Claim 5, and further comprising a polling engine (22) for polling the electronic mailbox (51, 53) for retrieving and storing UIDs within the database (60).

7. A communications system and being **characterized by**:
the electronic mail server of any one of claims 1 to 4; and,
a polling engine (22) configured to poll the electronic mailbox (51, 53) to retrieve the UIDs corresponding to new electronic messages in the electronic mailbox (51, 53).

8. An electronic mail "email" processing method being **characterized by**:
storing Unique Identifiers "UIDs" and Message Identifiers "MsgIds" of electronic messages in a database;
polling an electronic mailbox (51, 53) to retrieve new unique identifiers "UIDs" corresponding to new electronic messages having Message Identifiers "MsgIds" and storing in the database;
obtaining mappings from the database for the unique identifiers "UIDs" of the new electronic messages, and Message Identifiers "MsgIds" ;
caching the UIDs and MsgIds into a cache (44);
receiving at least one of a Get, Delete or Move request for a particular Message Identifier "MsgId" that has not been cached;
mapping said MsgId and an "n" number of other MsgIds before and after said MsgId; and
caching said MsgId and the "n" number of other MsgIds.

9. A method according to Claim 8, wherein "n" is a number between 10 and 100.

10. A method according to Claim 8, which further comprises maintaining the number of cached mappings of MsgIds to below a predetermined number.

11. A method according to Claim 10, which further comprises clearing the cache (44) if the number of cached mappings of MsgIds exceeds a predetermined number.

12. A method according to Claim 8, wherein the MsgIds and UIDs are persistently stored within a database (60).

13. A method according to Claim 8, which further comprises deleting from memory the UIDs that had been cached after polling.

14. A computer program comprising computer program code means adapted to perform the steps of method 8 when said program is run on a computer, said computer program being embodied on a computer-readable medium.

## Patentansprüche

1. "Elektronische Mail (Email - electronic mail)"-Server und **gekennzeichnet durch**:
eine Datenbank, die eindeutige Identifizierer (UIDs - unique identifiers) und
Nachrichten-Identifizierer (MsgIds - message identifiers) von elektronischen Nachrichten speichert;
einen Proxy (40), der ausgebildet ist zum Erlangen von Zuordnungen aus der Datenbank für eindeutige Identifizierer "UIDs", die neuen elektronischen Nachrichten entsprechen und Nachrichten-Identifizierer "MsgIds" haben, wobei die "MsgIds" und "UIDs" bestimmt wurden aus einem Abfragen bzw. Pollen einer elektronischen Mailbox (51, 53), wobei die UIDs und die Nachrichten-Identifizierer "MsgIds" für die neuen elektronischen Nachrichten persistent bzw. dauerhaft in der Datenbank gespeichert sind; und
einen Cachespeicher (44), in dem die Zuordnungen der UIDs und Msglds,
die von der Datenbank erlangt werden, zwischengespeichert werden;
wobei der Proxy (40) betriebsfähig ist zum:
Empfangen zumindest einer aus einer "Get"-, "Delete"- oder "Move"-Anforderung für einen bestimmten Msgld, der nicht zwischengespeichert wurde;
Zuordnen des MsgIds und einer "n" Anzahl von anderen Msglds vor und nach dem Msgld, der nicht zwischengespeichert wurde;
und Zwischenspeichern des Msglds und der "n" Anzahl von anderen Msglds.

2. Email-Server gemäß Anspruch 1, wobei "n" eine Zahl zwischen 10 und 100 ist.

3. Email-Server gemäß Anspruch 1, wobei der Proxy (40) betriebsfähig ist zum Halten der Anzahl von zwischengespeicherten Zuordnungen von Msglds unter einer vorgegebenen Anzahl.

4. Email-Server gemäß Anspruch 3, wobei der Proxy (40) betriebsfähig ist zum Leeren des Cachespeichers (44), wenn die Anzahl von zwischengespeicherten Zuordnungen von MsgIds eine vorgegebene Anzahl übersteigt.

5. Email-Server gemäß Anspruch 1, wobei ein persistentes Speichern der UIDs und Msglds in einer Datenbank (60) ist.

6. Email-Server gemäß Anspruch 5, und weiter aufweisend eine Abfrage-Maschine (22) zum Abfragen der elektronischen Mailbox (51, 53) zum Abrufen und Speichern von UIDs in der Datenbank (60).

7. Kommunikationssystem und **gekennzeichnet durch**:
den "elektronische Mail"-Server gemäß einem der Ansprüche 1 bis 4; und
eine Abfrage-Maschine (22), die konfiguriert ist zum Abfragen der elektronischen Mailbox (51, 53) zum Abrufen der UIDs, die neuen elektronischen Nachrichten in der elektronischen Mailbox (51, 53) entsprechen.

8. "Elektronische Mail (Email - electronic mail)"-Verarbeitungsverfahren, das **gekennzeichnet ist durch**:
Speichern eindeutiger Identifizierer (UIDs - unique identifiers) und
Nachrichten-Identifizierer (MsgIds - message identifiers) von elektronischen Nachrichten in einer Datenbank;
Abfragen einer elektronischen Mailbox (51, 53) zum Abrufen neuer eindeutiger Identifizierer "UIDs", die neuen elektronischen Nachrichten mit Nachrichten-Identifizierern "MsgIds" entsprechen, und Speichern in der Datenbank;
Erlangen von Zuordnungen aus der Datenbank für die eindeutigen Identifizierer "UIDs" der neuen elektronischen Nachrichten und
Nachrichten-Identifizierer "MsgIds";
Zwischenspeichern bzw. Caching der UIDs und Msglds in einem Cachespeicher (44);
Empfangen zumindest einer aus einer "Get"-, "Delete"- oder "Move"-Anforderung für einen bestimmten Nachrichten-Identifizierer "MsgIds", der nicht zwischengespeichert wurde;
Zuordnen des MsgIds und einer "n" Anzahl von anderen Msglds vor und
nach dem MsgId; und
Zwischenspeichern des Msglds und der "n" Anzahl von anderen Msglds.

9. Verfahren gemäß Anspruch 8, wobei "n" eine Zahl zwischen 10 und 100 ist.

10. Verfahren gemäß Anspruch 8, das weiter aufweist ein Halten der Anzahl von zwischengespeicherten Zuordnungen von Msglds unter einer vorgegebenen Anzahl.

11. Verfahren gemäß Anspruch 10, das weiter aufweist ein Leeren des Cachespeichers (44), wenn die Anzahl von zwischengespeicherten Zuordnungen von Msglds eine vorgegebene Anzahl übersteigt.

12. Verfahren gemäß Anspruch 8, wobei die Msglds und UIDs dauerhaft in einer Datenbank (60) gespeichert werden.

13. Verfahren gemäß Anspruch 8, das weiter aufweist ein Löschen der UIDs aus dem Speicher, die zwischengespeichert wurden nach einem Abfragen.

14. Computerprogramm, das Computerprogramm-Codemittel aufweist, das ausgebildet ist zum Durchführen der Schritte des Verfahrens 8, wenn das Programm auf einem Computer läuft, wobei das Computerprogramm auf einem computerlesbaren Medium enthalten ist.

## Revendications

1. Serveur de courrier électronique, "email", et étant **caractérisé par** :
une base de données qui stocke des identifiants uniques "UIDs" et des identifiants de messages "MsgIds" de messages électroniques ;
un proxy (40) qui est adapté pour obtenir des mises en correspondance issues de la base de données pour des identifiants uniques "UIDs" Il correspondant à de nouveaux messages électroniques et ayant des identifiants de messages "MsgIds" où les MsgIds et les UIDs ont été déterminés à partir de la scrutation d'une boîte aux lettres électronique (51, 53), les UIDs et les identifiants de messages "MsgIds" pour les nouveaux messages électroniques étant stockés en continu dans la base de données ; et,
une mémoire cache (44) dans laquelle les mises en correspondance des UIDs et des MsgIds obtenues de la base de données sont mises en antémémoire ;
où le proxy (40) peut être mis en oeuvre pour :
recevoir au moins l'une parmi une demande Saisir, Supprimer ou Déplacer à partir d'un MsgId particulier qui n'a pas été mis en antémémoire ;
mettre en correspondance ledit MsgId et un nombre "n" d'autres MsgIds avant et après ledit MsgId qui n'a pas été mis en antémémoire ;
et mettre en antémémoire ledit MsgId et le nombre "n" d'autres MsgIds.

2. Serveur d'email selon la revendication 1, dans lequel "n" est un nombre compris entre 10 et 100.

3. Serveur d'email selon la revendication 1, dans lequel ledit proxy (40) peut être mis en oeuvre pour maintenir le nombre de mises en correspondance placées en antémémoire de MsgIds en dessous d'un nombre prédéterminé.

4. Serveur d'email selon la revendication 3, dans lequel ledit proxy (40) peut être mis en oeuvre pour vider la mémoire cache (44) si le nombre de mises en correspondances placées en antémémoire de MsgIds dépasse un nombre prédéterminé.

5. Serveur d'email selon la revendication 1, dans lequel le stockage continu des UIDs et des MSgIds se fait sur une base de données (60).

6. Serveur d'email selon la revendication 5, et comprenant en outre un moteur de scrutation (22) pour scruter la boîte aux lettres électronique (51, 53) afin de récupérer et stocker des UIDs dans la base de données (60).

7. Système de communications et étant **caractérisé par** :
le serveur de courrier électronique de l'une quelconque des revendications 1 à 4 ; et,
un moteur de scrutation (22) configuré pour scruter la boîte aux lettres électronique (51, 53) afin de récupérer les UIDs correspondant à de nouveaux messages électroniques dans la boîte aux lettres électronique (51, 53).

8. Procédé de traitement d'un courrier électronique, "email", étant **caractérisé par** le fait :
de stocker des identifiants uniques "UIDs" et des identifiants de messages "MsgIds" de messages électroniques dans une base de données ;
de scruter une boîte aux lettres électronique (51, 53) pour récupérer de nouveaux identifiants uniques "UIDs" correspondant à de nouveaux messages électroniques ayant des identifiants de messages "MsgIds" et les stocker dans la base de données ;
d'obtenir des mises en correspondance à partir de la base de données pour les identifiants uniques "UIDs" des nouveaux messages électroniques et des identifiants de messages "MsgIds" ;
de mettre dans une mémoire cache (44) les UIDs et les MsgIds ;
de recevoir au moins l'une d'une demande Saisir, Supprimer ou Déplacer pour un identifiant de message "MsgIds" particulier qui n'a pas été mis en antémémoire ;
de mettre en correspondance ledit MsgId et un nombre "n" d'autres MsgIds avant et après ledit MsgId ; et
de mettre en mémoire cache ledit MsgId et le nombre "n" d'autres MsgIds.

9. Procédé selon la revendication 8, dans lequel "n" est un nombre compris entre 10 et 100.

10. Procédé selon la revendication 8, qui comprend en outre le fait de maintenir le nombre de mises en correspondances de MsgIds placées en antémémoire en dessous d'un nombre prédéterminé.

11. Procédé selon la revendication 10, qui comprend en outre le fait de vider la mémoire cache (44) si le nombre de mises en correspondance de MsgIds placées en antémémoire dépasse un nombre prédéterminé.

12. Procédé selon la revendication 8, dans lequel les MsgIds et les UIDs sont stockés en continu dans une base de données (60).

13. Procédé selon la revendication 8, qui comprend en outre le fait d'effacer de la mémoire les UIDs qui ont été mis en antémémoire après scrutation.

14. Programme d'ordinateur comprenant un moyen de code d'un programme d'ordinateur adapté pour exécuter les étapes du procédé 8 lorsque ledit programme est exécuté sur un ordinateur, ledit programme d'ordinateur étant incorporé sur un support lisible par ordinateur.
